# EUROPEAN PATENT SPECIFICATION

(11) **EP 1 543 755 B1**
(45) Date of publication and mention of the grant of the patent: **04.06.2008**
(21) Application number: 04466034.8
(22) Date of filing: 09.12.2004
(51) Int. Cl.: A47J 43/25

(54) **Utensil for the processing of food, namely garlic**
Vorrichtung zur Verarbeitung von Nahrungsmitteln, insbesondere Knoblauch
Appareil pour traiter des aliments, en particulier l'ail

(30) Priority: 12.12.2003 CZ 200314873 U
(43) Date of publication of application: 22.06.2005
(73) Proprietor: Ing. Petr Gross, s.r.o., Milotice nad Becvou - 753 67 (CZ)
(72) Inventor: Gross, Petr, Vrbno pod Pradedem PSC: 793 26 (CZ)
(74) Representative: Müller, Frank Peter

(56) References cited:
- GB-A- 1 569 156
- US-A- 2 220 485
- US-A- 3 008 504

## Description

### Technical Field

The invention relates to a utensil for the processing of food, especially garlic, applicable in the preparation of food.

### Description of prior art

In the preparation of food it is customary to secure a garlic clove on the chopping board with one hand and apply pressure from the flat side of a knife held in the other to break down or crush the garlic clove and produce a paste with added salt. The disadvantage of this method is the resulting uneven consistency of the paste and the high content of salt. A further disadvantage lies in the characteristic pungent smell of garlic, which requires the unavoidable thorough cleaning and removal of all garlic fibres from the chopping board, after use.

Another way is the use of the hand held garlic press. This consists of a small cylindrical container and piston, both connected to a lever, which, when squeezed by hand, results in greater pressure being applied by the piston to the garlic clove held in the cylindrical container. The bottom end of the container is perforated and the crushed garlic is squeezed out through the perforations. The disadvantage of using the press is the resulting uneven consistency of the crushed garlic and a large part of the garlic remaining in the container. A further disadvantage is that part of the garlic remains lodged in the perforations and a special tool requires to be used to dislodge the garlic and clean the press. As far as the production of the hand held press is concerned, a further disadvantage is the use of metal in the construction of the press to facilitate the application of a relatively high level of pressure. These disadvantages, coupled with the number of moving parts making up the garlic press contribute to higher production costs and by implication a higher price. Also, the need to use the grip of one hand on the lever to obtain sufficient pressure results in the use of a relatively small container for the actual crushing of garlic, which is inadequate in size.

It is further known that food can be processed by means of a grater equipped with sharp perforations. A drawback is an insufficiently broken down garlic and difficulty in cleaning the grater after use.

Document GB-A-1 569 156 discloses a utensil according to the preamble of independent claim 1.

### Disclosure of Invention

The above mentioned disadvantages are solved by a utensil for the processing of food, especially garlic, according to claim 1. Preferably, the height of the edge of the protrusion above the surface of the working area is in the range of 0.2 mm to 2 mm and the minimal distance of the consecutively placed edges of the protrusions is at least 5 mm, lying against the grating direction. Further preferred embodiments are defined in the dependent claims.

An advantage of the utensil for the processing of food, namely garlic, and relative to the above named invention, is the resulting even texture and consistency of the processed product and the easy cleaning and removal of remaining garlic matter from the utensil. Low production cost is an advantage, particularly in the case of the utensil for the processing of food consisting of one plate made from plastic. The resulting advantage of the utensil for the processing of food, according to claim No 2, is a product of perfect consistency and texture, namely in the case of a garlic clove.

### Description of the Drawings

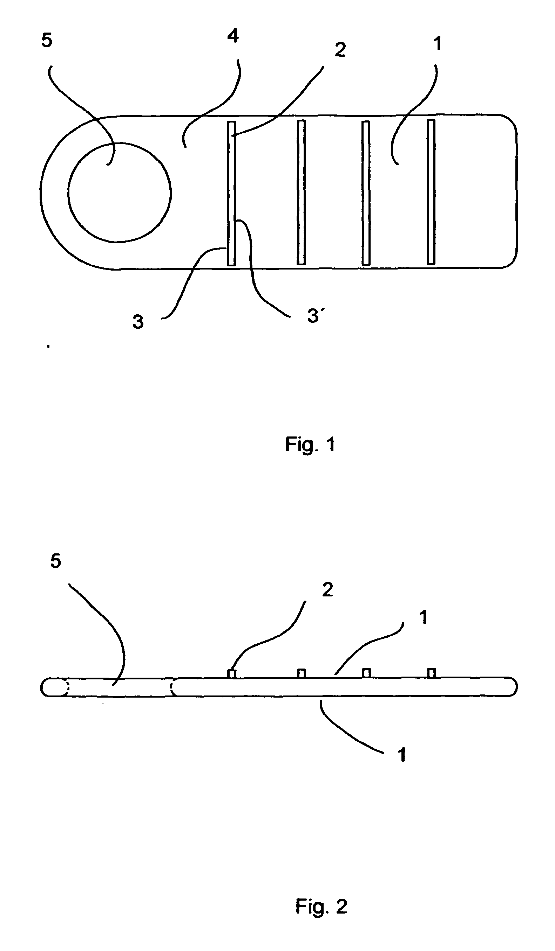

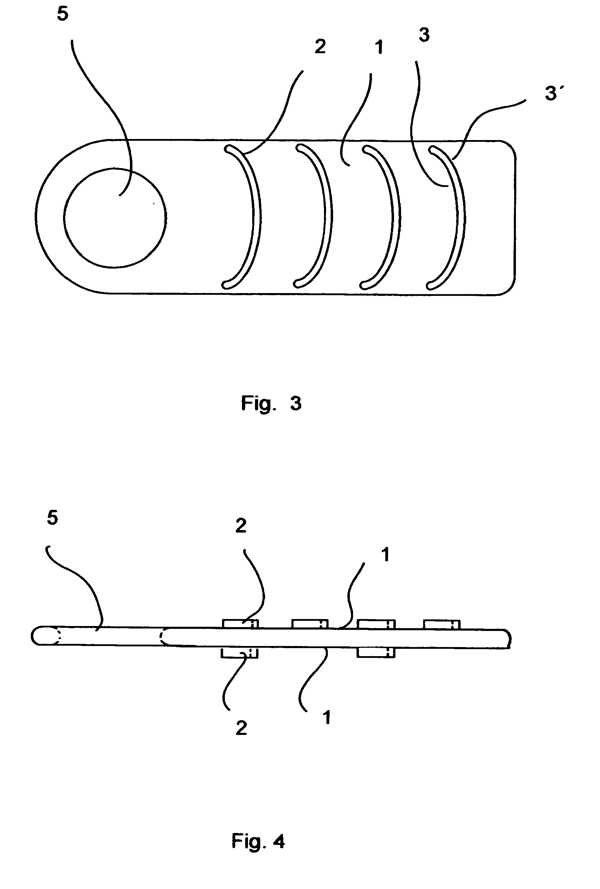

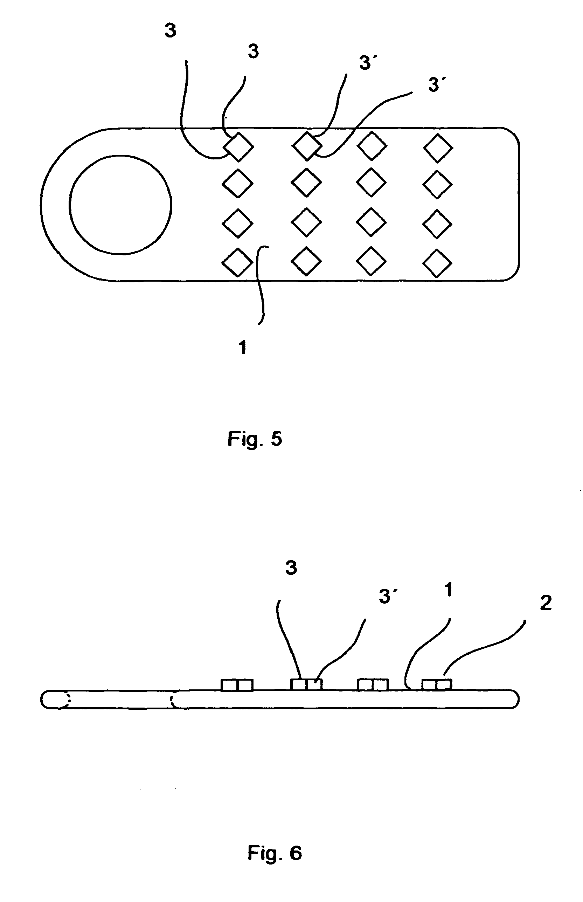

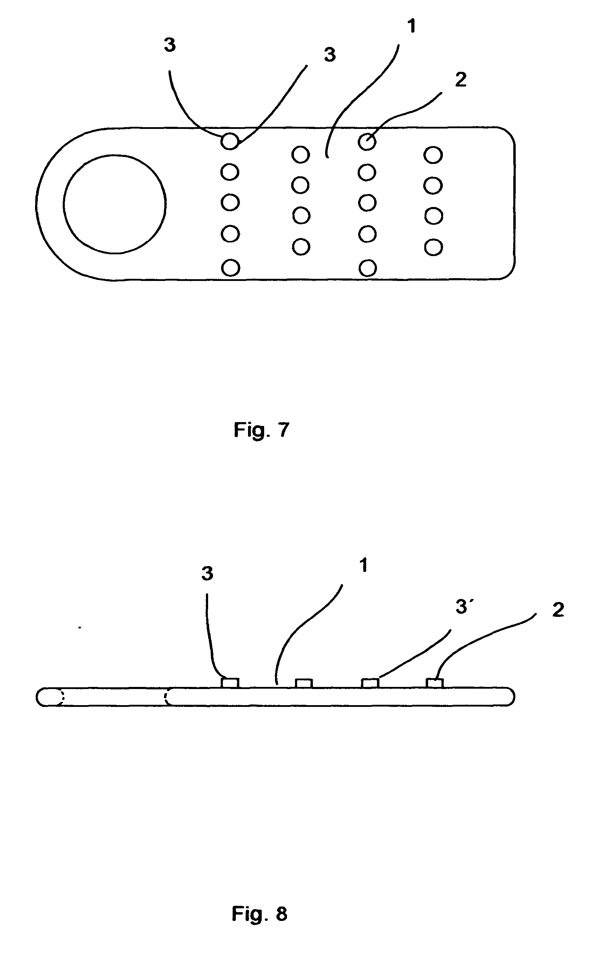

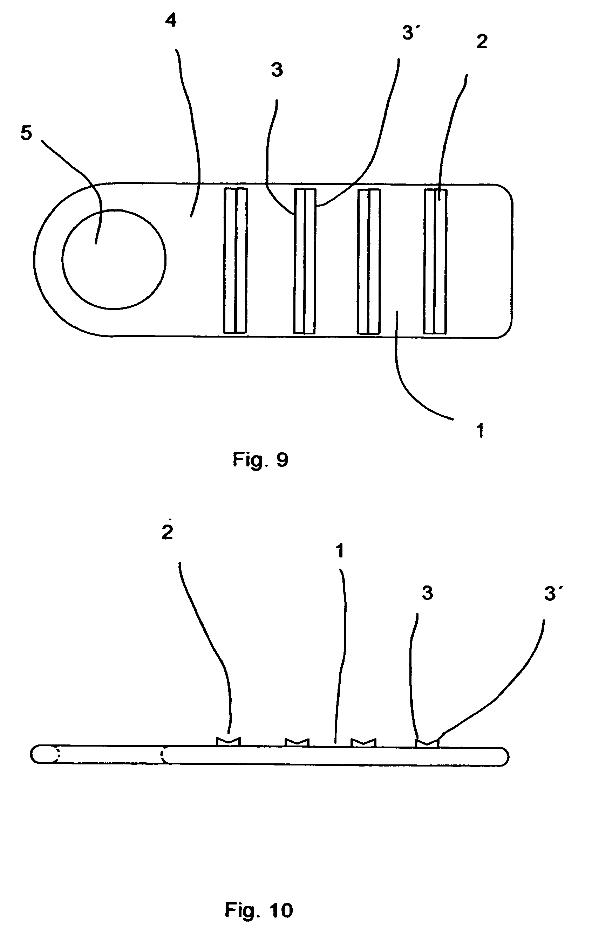

Fig.1 shows the plan view of the utensil for the processing of food, especially garlic, and Fig. 2 shows the side elevation of the utensil for the processing of food, especially garlic, both according to example 1. Fig.3 shows the plan view of the utensil for the processing of food, especially garlic, and Fig. 4 shows the side elevation of the utensil for the processing of food, especially garlic, both according to example 2. Fig.5 shows the plan view of an exemplatory utensil for the processing of food, especially garlic, and Fig. 6 shows the side elevation of the utensil for the processing of food, shown in Fig. 5, namely garlic, both according to example 3. Fig.7 shows the plan view of an exemplatory utensil for the processing of food, especially garlic, and Fig. 8 shows the side elevation of the utensil for the processing of food shown in Fig. 7, especially garlic, both according to example 4. Fig. 9 shows the plan view of the utensil for the processing of food, especially garlic, and Fig. 10 shows the side elevation of the utensil for the processing of food, especially garlic, both according to example 5.

### Examples of Embodiment

### Example 1

The utensil for the processing of food, especially garlic, relative to example 1 consists of a flat oblong plate (4), equipped with an opening (5) at one end, in order to be held with the fingers of one hand while in a slanting position and the other end of the plate (4) designed to rest on a flat surface. One of the surface areas of the plate (4) is the working area (1). The working area (1) is equipped with protrusions (2) in the shape of oblong rectangular blocks positioned at a right angle towards the grating direction. The edges (3,3') of the protrusions (2) are placed at a height of 1mm from the surface of the working area (1), with the distance between neighbouring protrusions being 10 mm. In the processing of garlic, the garlic clove is held in one hand at right angles to the edges (3,3') of the protrusions and is moved along the working area (1) across the protrusions (2) in an up and down manner. Moving the garlic clove across the protrusions (2) in the first direction, the edges (3) facing up against this direction are instrumental in the grating of the garlic clove, whereas the garlic clove being moved in the opposite direction, the edges (3') placed on the opposite side of the protrusions are also used in the processing.

### Example 2

The utensil for the processing of food, especially garlic, according to example 2 differs from example 1 in that the protrusions (2) are slightly curved and placed at parallel intervals on the working area (5) with the plate (4) being equipped with two working areas (1) facing back to back. The distance between the protrusions (2) differs in the two working areas (1) in the distance range between 6 mm to 12 mm. The height of the protrusions (2) is 1mm in both working areas.

### Example 3

The construction of an exemplatory utensil for the processing of food, especially garlic, as being shown in Fig.5 and being not covered by the invention is applicable in the processing of nuts. It is equipped with protrusions (2) cuboid in shape with a square base, of 1mm height and arranged on the working area (1) in rows of four so that one of the base diagonals shares its direction with the direction of movement of the nut being processed. The edges of the protrusions (2) form an angle of 45 degrees with the direct axis of the plate (4). Individual rows of protrusions (2) are placed at a distance of 6mm.

### Example 4

An exemplatory utensil for the processing of food, especially garlic, which is not covered by the invention is used for the processing of carrots, differs from example 3 in having cylindrically shaped protrusions (2) of 0.5 mm in height, and placed in rows at 12 mm distance from each other.

### Example 5

The utensil for the processing of food, especially garlic, according to example 5 differs from example 1 for the processing of apples so that each protrusion (2) has a shape of a prism placed at right angle in relation to the direct axis of the plate (4), so that in the vicinity of the edge (3,3') the walls of the prism form an angle of 80 degrees.

### Industrial Applicability

The invention can be used for the processing of other foodstuffs, eg. raw ginger, nutmeg , cheese or chocolate.

## Claims

1. Utensil for the processing of food, especially garlic, with a working area (1) equipped with at least one protrusion (2) with vertical side walls and top walls with generally oblong edges (3, 3') between said side walls and top walls,
**characterized in that** the protrusions (2) have an oblong and essentially rectangular shape and are positioned at a right angle to the grating direction.

2. Utensil according to claim 1,
**characterized in that** the height of the edge (3,3') of the protrusion (2) above the surface of the working area (1) is in the range of 0,2 to 2 mm and the minimal distance of the consecutively placed edges (3,3') of the protrusions (2) is at least 5 mm, lying against the grating direction.

3. Utensil according to claim 1 or 2,
**characterized in that** the protrusions (2) are slightly curved in their length direction.

4. Utensil according to at least one of the preceding claims,
**characterized in that** the protrusions (2) are placed parallel to each other on the working area (1).

5. Utensil according to claim 3,
**characterized by** two working areas (1) with protrusions (2) placed on both sides of the utensil.

## Patentansprüche

1. Vorrichtung zur Verarbeitung von Nahrungsmitteln, insbesondere Knoblauch, mit einer Arbeitsfläche (1) ausgestattet mit wenigstens einem Vorsprung (2) mit vertikalen Seitenwänden und oberen Wänden mit im Allgemeinen länglichen Kanten (3, 3') zwischen den Seitenwänden und den oberen Wänden,
**dadurch gekennzeichnet, dass** die Vorsprünge (2) eine längliche und im Wesentlichen rechteckige Form haben und in einem rechten Winkel zur Reibrichtung angeordnet sind.

2. Vorrichtung nach Anspruch 1,
**dadurch gekennzeichnet, dass** die Höhe der Kante (3, 3') des Vorsprungs (2) über der Oberfläche der Arbeitsfläche (1) im Bereich von 0,2 bis 2 mm liegt und der Mindestabstand der aufeinanderfolgend angeordneten Kanten (3, 3') der Vorsprünge (2) wenigstens 5 mm beträgt, entgegen der Reibrichtung gelegen.

3. Vorrichtung nach Anspruch 1 oder 2,
**dadurch gekennzeichnet, dass** die Vorsprünge (2) in ihrer Längsrichtung leicht gekrümmt sind.

4. Vorrichtung nach wenigstens einem der vorhergehenden Ansprüche, **dadurch gekennzeichnet, dass** die Vorsprünge (2) parallel zueinander auf der Arbeitsfläche (1) angeordnet sind.

5. Vorrichtung nach Anspruch 3,
**gekennzeichnet durch** zwei Arbeitsflächen (1) mit Vorsprüngen (2), die auf beiden Seiten der Vorrichtung angeordnet sind.

## Revendications

1. Ustensile utilisé pour la préparation de produits alimentaires, en particulier l'ail, et qui comporte une zone de travail (1) avec au moins une partie saillante (2) laquelle possède des parois latérales verticales et des parois supérieures avec des bords (3, 3') de forme généralement oblongue entre lesdites parois latérales et parois supérieures,
**caractérisé en ce que** les parties saillantes (2) ont une forme oblongue et sensiblement rectangulaire et sont positionnées à angle droit par rapport au sens de râpage.

2. Ustensile, selon la revendication 1,
**caractérisé en ce que** la hauteur du bord (3, 3') de la partie saillante (2) au-dessus de la surface de la zone de travail (1) est comprise dans une gamme de 0,2 à 2 mm et que la distance minimale entre les bords (3, 3') positionnés de façon consécutive au niveau des parties saillantes (2) est égale à 5 mm au moins, dans le sens opposé au sens de râpage.

3. Ustensile, selon la revendication 1 ou 2,
**caractérisé en ce que** les parties saillantes (2) sont légèrement incurvées dans le sens de la longueur.

4. Ustensile, selon l'une au moins des revendications précédentes,
**caractérisé en ce que** les parties saillantes (2) sont positionnées parallèlement l'une par rapport à l'autre sur la zone de travail (1).

5. Ustensile, selon la revendication 3,
**caractérisé par** deux surfaces de travail (1), alors que des parties saillantes (2) sont prévues sur les deux côtés de l'ustensile.
